# EUROPEAN PATENT SPECIFICATION

(11) **EP 1 264 436 B1**
(45) Date of publication and mention of the grant of the patent: **03.09.2014**
(21) Application number: 01916438.3
(22) Date of filing: 06.03.2001
(51) Int. Cl.: H04N 21/8358, H04N 21/2347, H04L 9/00

(54) **METHOD AND SYSTEM TO UNIQUELY ASSOCIATE MULTICAST CONTENT WITH EACH OF MULTIPLE RECIPIENTS**
VERFAHREN UND VORRICHTUNG ZUR EINDEUTIGEN VERKNÜPFUNG EINES MEHRFACHSENDUNGSDATENINHALTS MIT MEHREREN EMPFÄNGERN
PROCEDE ET DISPOSITIF PERMETTANT D'ASSOCIER DE MANIERE UNIQUE UN CONTENU MULTIDIFFUSION AVEC CHACUN DES DIVERS DESTINATAIRES

(30) Priority: 06.03.2000 EP 00200793; 12.07.2000 US 218031 P
(43) Date of publication of application: 11.12.2002
(73) Proprietor: Irdeto USA, Inc., Santa Clara, CA 95054 (US); Irdeto B.V., 2132 LS Hoofddorp (NL)
(72) Inventor: WHITE, Mark, Andrew, George, Carlsbad, CA 92009 (US); WAJS, Andrew, Augustine, NL-2023 AA Haarlem (NL)
(74) Representative: Boult Wade Tennant
(86) International application number: PCT/US2001/007206
(87) International publication number: WO 2001/067667

(56) References cited:
- EP-A- 0 939 552
- JP-A- 10 303 888
- JP-A- 10 304 324
- US-A- 5 687 236
- US-A- 5 787 171
- US-A- 5 982 891
- US-A- 5 991 426
- BARDA J ET AL: "EUROVISION NETWORK SECURITY THROUGH ACCESS CONTROL AND WATERMARKING" EBU REVIEW- TECHNICAL, EUROPEAN BROADCASTING UNION. BRUSSELS, BE, no. 281, 21 September 1999 (1999-09-21), pages 32-35, XP000862722 ISSN: 0251-0936
- ZHAO J: "A www service to embed and prove digital copyright watermarks" PROCEEDINGS OF THE EUROPEAN CONFERENCE ON MULTIMEDIA APPLICATIONS,SERVICES AND TECHNIQUES, XX, XX, 26 May 1996 (1996-05-26), pages 695-709, XP002144826

## Description

### FIELD OF THE INVENTION

The present invention relates generally to data processing. More particularly, the present invention relates to "watermarking" or uniquely identifying content. Specifically, the present invention relates to a method and system to associate uniquely content with each of multiple recipients.

### BACKGROUND OF THE INVENTION

Today, text, audio, and video content ("content") can be transmitted using a number of technologies. For example, a server on the Internet can transmit a video clip to a plurality of users. Such a process is typically referred to as "streaming." A number of challenges exist, however, for streaming content on the Internet. One challenge is content protection. The challenge of content protection relates to preventing illegal copying and distribution of premium content. Another challenge is bandwidth economics. The challenge of bandwidth economics relates to transmitting content within a limited bandwidth.

One method for content protection is watermarking. Watermarking is a process of inserting unique information ("watermark") into content in a non-removable manner. That is, an attempt to remove the watermark may cause loss of all or part of the original content. A watermark is a form of rubber-stamping, e.g., a frame of a motion picture, with a unique signature. Typically, for a server on the Internet to perform watermarking, the server must send content with a different watermark for each user. Thus, a disadvantage of the watermarking process alone is that each item of content must be uniquely watermarked for each user or entity to whom the content is to be distributed. If the number of users to receive the content is large, watermarking can be bandwidth intensive and very complex for the server.

Another method for content protection is content encryption or scrambling. For example, in order to prevent unauthorized copying of content, the content can be encrypted with one or more keys and decrypted by users with correct keys to access the content. Generally, the content is both compressed and encrypted. A disadvantage of encrypting content alone is that after decrypting and descrambling the content unauthorized copies of the content can still be made. To locate the source of such unauthorized copying, a fingerprint or watermark can be added to content to indicate the content is copyright protected. A problem with adding a watermark to encrypted content is that it must be first decrypted before the watermark can be added. Consequently, if the content is encrypted, access to the content is not available. Moreover, adding watermarks and decrypting content requires extensive processing capacity.

One method to address bandwidth constraints is multicasting. Multicasting is the process of a single server sending content to multiple users at the same time. For example, a server on the Internet can send a video clip once ("multicast") to many users. Thus, a single server can send content to many users without either the server or the network becoming too congested. A disadvantage of multicasting alone is that it is difficult to protect the content being multicasted. For instance, multicasting is incompatible with existing watermarking technology because multicasting relies on all users receiving exactly the same data. Watermarking, however, relies on all users receiving uniquely "stamped" data. As such, a number of problems exist with distributing content such as text, audio, and video data on the Internet that relate to providing content within bandwidth constraints and ensuring content is protected or identified.

Article by Barda et al entitled "Eurovision Network Security Through Access Control and Watermarking" (EBU Review - Technical, European broadcasting Union, Brussels, BE, no. 281, 21 September 1999, pages 32-35, ISSN: 0251-0936) describes various issues that are important to transmission security on networks such as the Eurovision network.

In particular, the article discloses applying a first watermark to an identifier used at the production level and applying a second watermark to a different identifier used at the broadcasting level and including the two identifiers watermarked in this manner in a stream of data containing the encrypted original content.

### SUMMARY OF THE INVENTION

Various aspects and embodiments of the invention are set in the appended claims.

Other features and advantages of the present invention will be apparent from the accompanying drawings, and from the detailed description, which follows bellow.

### BRIEF DESCRIPTION OF THE DRAWINGS

The present invention is illustrated by way of example, and not limitation, by the figures of the accompanying drawings in which like references indicate similar elements and in which:
**FIG.1** illustrates an exemplary diagram of a network environment in which the present invention can be implemented;
**FIG. 2** illustrates a diagram of encrypted content being combined;
**FIG. 3** illustrates a block diagram of a content server communicating encrypted content with a client,;
**FIG. 4A** illustrates a flow chart of an operation to provide encrypted content;
**FIG.** 4B illustrates a flow chart of an operation to decrypt encrypted content;
**FIG. 5** illustrates a block diagram of a content server for unicasting keys and multicasting encrypted watermarked content;
**FIG. 6A** illustrates a flow chart of an operation to create a single stream of data having encrypted content;
**FIG. 6B** illustrates a flow chart of an operation of distributing keys and the single stream of data of **FIG. 6A****;**
**FIG. 7** illustrates exemplary video frames to perform the operation of FIG. 6A;and
**FIG. 8** is a block diagram of an exemplary digital processing or computing system in which the present invention can be implemented.

### DETAILED DESCRIPTION

Methods and systems are described in which content can be safely distributed and protected in a manner that is viable in terms of bandwidth economy and ensures that clients can be identified by the content received. In one example, copies of enaypted content can be provided such that unique watermarks. can be added to the copies. In another example, content can be both watermarked uniquely for multiple clients and multicasted to the clients. As such, content can be distributed using the bandwidth efficiency of multicasting while providing reliable content protection of watermarking.

In the following description, a watermark refers to an identifier or signature. For example, the identifier or signature can be used to indicate copyright protected data. The watermark can also be used to indicate the origin and authenticity of the data or the identity of clients/users/customers of the data. In addition, watermarking refers to a process of encrypting content in such a manner that it can be multicasted and still yield a unique version upon decryption. Furthermore, in the following description, for purposes of explanation, numerous specific details are set forth in order to provide a thorough understanding of the present invention. It will be evident, however, to one skilled in the art that the present invention may be practiced without these specific details.

### Exemplary Network Environment

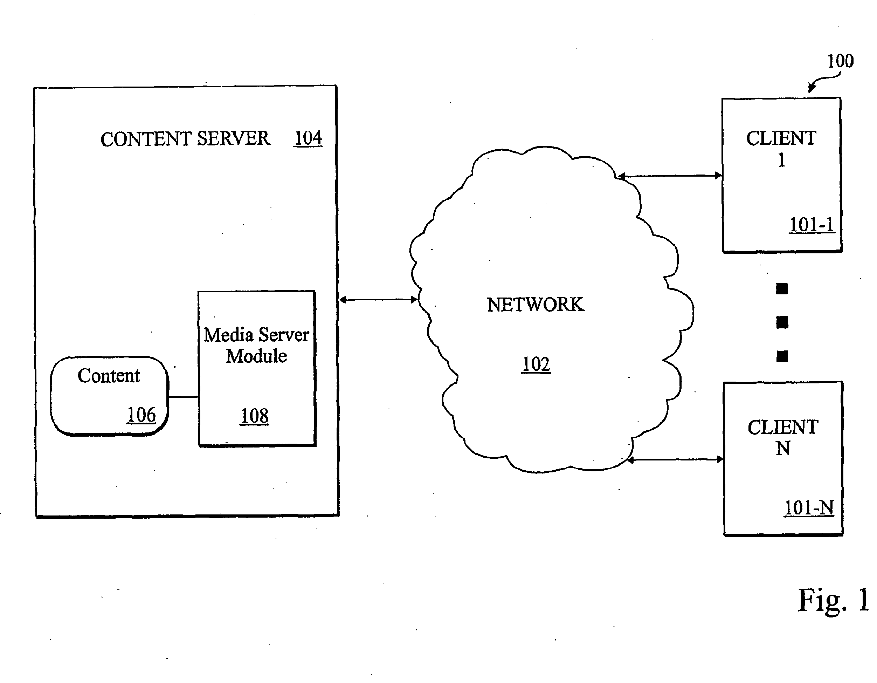

**FIG.1** illustrates an exemplary diagram of a network environment 100 in which the present invention can be implemented. Referring to **FIG.1****,** content server 104 can communicate with a plurality of clients 1 (101-1) through N (101-N) via network 102. In one embodiment, network 102 is the Internet. The Internet is a worldwide system of interconnected networks that runs the Internet Protocol (IP) to transfer data (e.g., packets). In other embodiments, network 102 can be other types of networks such as, for example, a token ring network, local area network (LAN), or a wide area network (WAN). Network 102 can also be implemented in a wired or wireless environment.

Content server 104 is a network device for communicating on network 102. In one embodiment, content server 104 is a general purpose computer such as a web server. In other embodiments, content server 104 is a network device including a network router, switch, bridge, gateway, or other like network device, for communicating on network 102. Content server 104 includes a media server module 108 coupled to content storage 106. Content storage 106 is a storage device such as, for example, a hard disk, compact disk (CD), digital video disc (DVD), a random access memory (RAM), a dynamic random access memory (DRAM), or other like memory devices to store content for distribution.

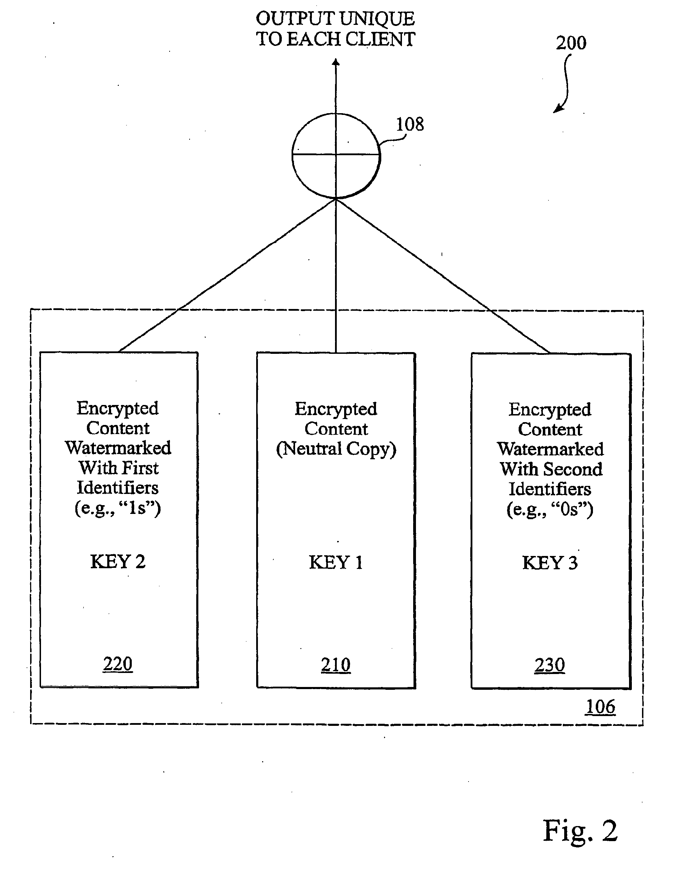

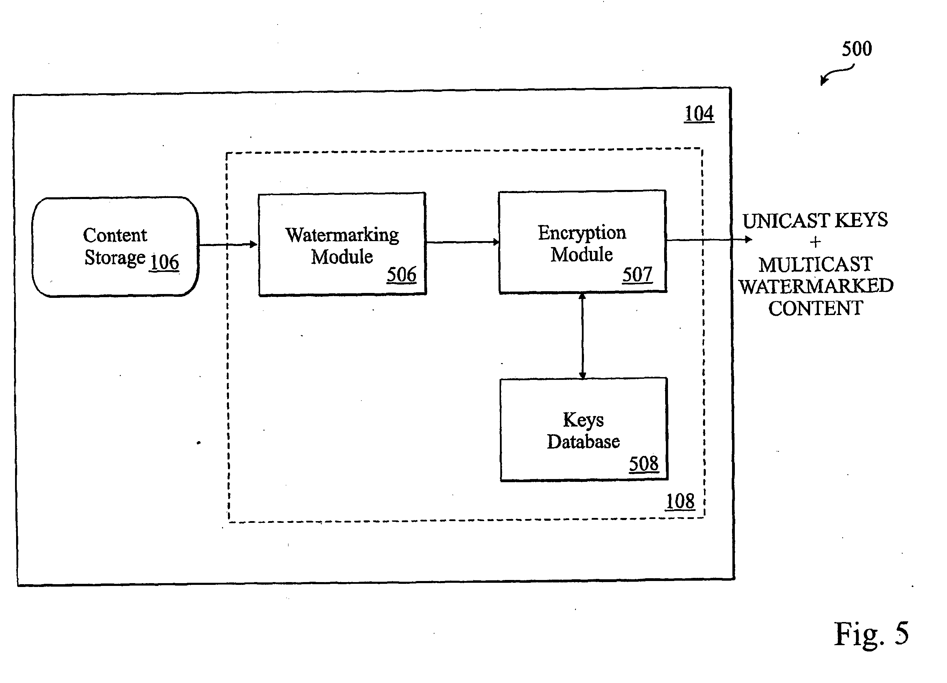

Media server module 108 may be a processing device to process instructions or code to perform the operations described herein. Media server module 108 may be hardware and/or software modules to perform the same. Media server module 108 retrieves and processes content stored in content storage 106 and distributes the content to clients 1 through N. The content stored in content storage 106 can include video and/or audio data or other like types of data. For example, the content can include Moving Picture Experts Group (MPEG) data. Media server module 108 may operate according to the processing techniques as described with respect to **FIGS. 2****,** **3****,** **4A** and **4B****.** Media server module 108 may operate according to the processing techniques as described with respect to **FIGS. 5****,** **6A****,** **6B****,** and **7****.**

Clients 1 through N can be general purpose computers for receiving content from content server 104 via network 102. Alternatively, clients 1 through N can be another content server such as content server 104. For example, clients 1 through N can be personal computers, workstations, laptop computers, or other like computing devices. Clients 1 through N can also be electronic portable devices such as, for example, a personal data assistant (PDA), wireless telephone, or other like devices, which can communicate with content server via network 102 over a wired or wireless medium. Clients 1 through N can include application to view and display content from content server 104. For example, clients 1 through N can include an application such as, for example, Real Player^{™} or QuickTime^{™} to play back video data.

### Providing Copies of Encrypted Content with Unique Watermarks Example

The following examples with respect to **FIGS. 2****,****3****,****4A** and **4B** describe providing copies of encrypted content with unique watermarks for each of a plurality of clients and broadcasting the encrypted content to the clients. **FIG. 2** illustrates a diagram 200 of encrypted content being combined For purposes of explanation, the content is described as "movie content" but can easily be other types of content, e.g., an audio file of a record.

In one example content storage 106 includes three copies of movie content. Each copy stored in content storage 106 is encrypted in a suitable manner. A first copy 210 referred to as "neutral copy" is encrypted. A second copy 220 of the content is obtained by adding a watermark with a first identifier, e.g., a sequence of "Is" or a more complex binary sequence, to at least one part of the complete content. Thereafter, second copy 220 is encrypted in a suitable manner so that an encrypted copy watermarked with the first identifier is obtained. A third copy 230 is obtained by adding a watermark with a second identifier, e.g., a sequence of "Os" or a more complex binary sequence, to at least one part of the complete content Thereafter, third copy 230 is encrypted in a suitable manner so that an encrypted copy watermarks with the second identifier is obtained. Second and third copies 220 and 230 can be watermarked with any unique identifiers.

The watermarked copies 220 and 230 may include a percentage of the original movie content. For example, watermarked copies 220 and 230 may include 1% to 20% of the complete movie content. Nevertheless, the complete movie content can be watermarked with first and second identifiers, respectively. In an alternative embodiment, the neutral copy 210 can be omitted. Furthermore, copies 210,220, and 230 can be stored on a separate storage device or on a separate server.

In one example, if a client requests the movie content from content server 104, media module server 108 will add a watermark unique to the client. That is, in the example of **FIG. 2****,** the watermark will be a unique identifier having unique sequences of ones ("1s") and zeroes ("0s"). In accordance with this unique sequence of ones and zeros, media module server 108 combines encrypted parts of the neutral copy 210, first copy 220 watermarked with ones, and second copy 230 watermarked with zeroes and forwards the combination to the requesting client. As such, the requesting client receives an encrypted copy with watermarks unique to the client.

The watermarks, however, are not necessary to decrypt and encrypt the content in the relatively insecure environment of content server 104. The unique identification of ones and zeroes and associated client identification information can be stored in content storage 106 or in a separate storage device. Neutral copy 210 of scrambled content is used to reduce the amount of data that needs to be stored in content storage 106. Alternatively, a scrambled copy of content can be provided with a watermark without using neutral copy 210.

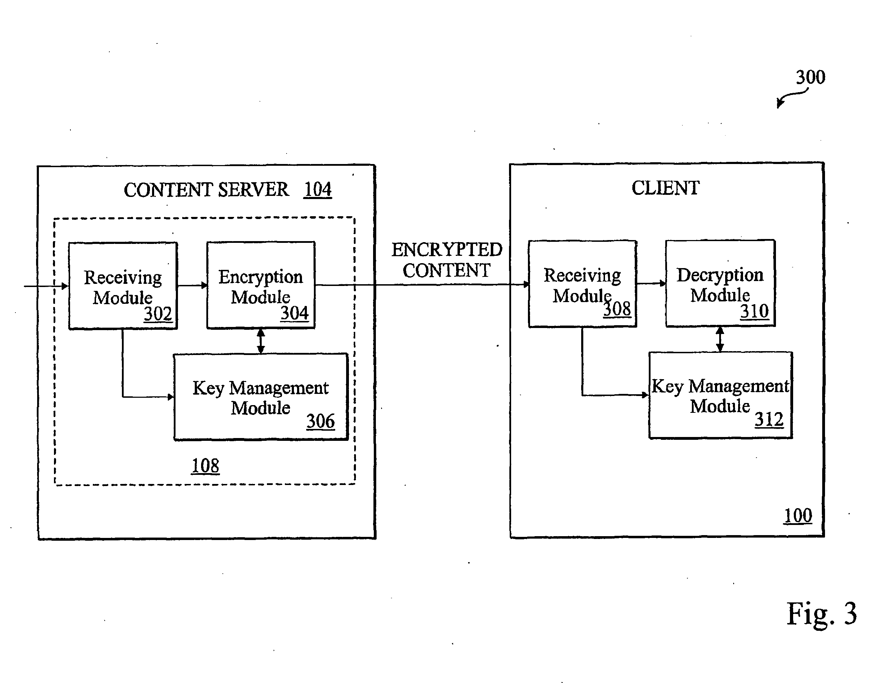

**FIG. 3** illustrates a block diagram 300 of content server 104 communicating scrambled content with a client 100. Client 100 can be representative of clients 1 through N in **FIG.1****.** Referring to **FIG. 3****,** content server 104 includes media server module 108 having a receiving module 302 coupled to Encryption module 304, which is coupled to key management module 306. Each of these modules can be a separate processing device or hardware and/or software modules operating within content server 104 to process instructions or code for performing the operations described wherein.

Encryption module 304 encrypts content from receiving module 302. Receiving module 302 may receive content from content storage 106. Receiving module 302 may receive content from network 102 or an external connection such as a cable or modem line. Encryption module 304 can encrypt content using keys in a standard encrypting process. For example, encryption module 204 can insert keys into a stream of video content as entitlement control messages (ECMs) to encrypt the stream of video content.

Watermarking can be performed on the client side. For example, client 100 can add watermarks during a decryption process for decrypting the encrypted content from content server 104. Client 100 can decrypt the encrypted content from content server 104 in real time or at a later time by storing the encrypted content.

In the following description for purposes of explanation, receiving module 302 in client 100 receives encrypted content that represents a "movie," which is to be broadcasted to client 100. Other types of content can be used such as text or audio content that is commonly broadcasted. Receiving module 302 can be programmed to provide a plurality of double parts or so-called double illuminated parts for the movie. If the movie is compressed, e.g., under the MPEG standard, I-frames or similar parts may be double illuminated to keep bandwidth low.

Receiving module 302 may provide the double illuminated sections with a watermark. For example, receiving module 302 can add a watermarks of zeros (or a first identifier) and a watermark of ones (or a second identifier) to selective sections of each double illuminated part. Receiving module 302 then forwards a neutral section and the double illuminated sections to encryption module 304.

Encryption module 304 uses keys provided by key management module 306. Key management module 306 can include one or more storage devices to store a number of keys to scramble content. Encryption module 3 04 may use a first key (Key 1) to encrypt the neutral section to provide neutral copy 210, a second key (Key 2) to encrypt watermarked sections with ones to provide second copy 220, and a third key to encrypt watermarked sections with zeros to provide third copy 230.

Key management module 306 in content server 104 includes a key management application to allow client 100 to receive a unique copy of encrypted content by delivering client keys 2 and 3 in a predetermined manner. Key management module 306 also allows client 100 to decrypt the encrypted content from encryption module 304. That is, key management module 100 provides the unique key information to client 100 via encryption module 304 to decrypt the encrypted content having a unique combination of encrypted sections watermarked with zeros (or first identifier) and sections watermarked with ones (or a second identifier). Furthermore, key management module 306 can store information related to which client received which unique combination. In this manner, client 100 can provide a clear content stream of the movie with a unique watermark or identification. Thus, the content stream can easily be identified to determine if the appropriate client is receiving and viewing the movie.

Key management module 306 can, for example, provide entitlement control messages BCMs with Key 1, Key 2, or Key 3. During broadcasting of the encrypted content, key management module 306 provides ECMs to respective clients containing the keys to obtain the unique combinations of ones and zeros at the respective clients. In the example of FIG. 3, key management module 306 can provide the BCMs to client 100 via Encryption module 304 or directly using an external connection to network 102.

Client 100 includes a receiving module 308 to receive encrypted content from content server 104. Receiving module 308 can also receive keys from key management module 306 within content server 104. Receiving module 308 is coupled to decrypting module 310, which is coupled to key management module 312. Each of these modules can be a separate processing device or hardware and/or software modules to process instructions or code for performing the operations described herein.

Client 100 uses decryption modules 310 to decrypt the encrypted content from content server 104. Receiving module 308 receives encrypted content from encryption module 304 and extracts BCMs from the encrypted content and forwards the BCMs to key management module 312. Key management module 312 provides keys from the extracted ECMs to decryption module 310. Receiving module 308 also provides the encrypted content from content server 104 to decryption module 310.

Content server 104 may provide ECMs with Key 1 and Key 2 or Key 3 unique to client 100. In particular, key management module 312 of client 100 delivers the keys to decryption module 310. Decryption module 310 uses the keys to obtain clear content with a unique combination of zeros and ones. If only Key 2 is available, only the second watermark with ones can be decrypted whereas if only the third key is available only the section watermarked with ones can be decrypted. In this example, Watermarking the neutral copy 210 is controlled directly by content server 104.

In an alternative example, key management programs or instructions can be downloaded or permanently stored in key management module 312 swithin client 100. For example, key management module 312 can include a smart card to provide security to downloaded programs or instructions. In particular, the smart card could receive an BCM including all three keys (Key 1 through Key 3) in which the keys are provided to decryption module 310 in a manner unique to the smart card.

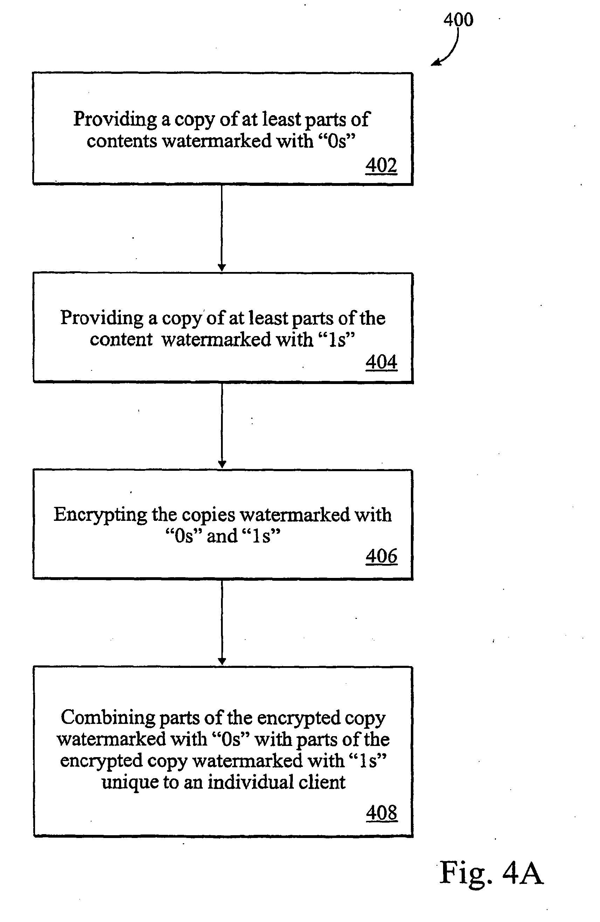

**FIG. 4A** illustrates a flow chart of an operation 400 to provide scrambled content. Initially, operation 400 begins at operation 402.

At operation 402, a copy of at least parts of content watermarked with a first identifier (e.g., "Os") is provided. For example, receiving module 302 provides content watermarked with "Os" to encryption module.

At operation 404, a copy of at least parts of content watermarked with a second identifier (e.g., "1s) is provided. For example, receiving module 302 provides content watermarked with "1s" to encryption module.

At operation 406, the copies of the watermarked content with "0s" and "1s" is encrypted. Encryption module 304 can encrypt the watermarked content into three parts such as neutral copy 210 with a unique Key 1, a first copy 220 of encrypted content watermarked with "1s" with a unique Key 2, and a second copy 230 of encrypted content watermarked with "0s" with a unique Key 3.

At operation 408, parts of first copy 220 and second copy 230 are combined unique to an individual client Parts of first copy 220 and second copy 230 may be combined with neutral copy 210. Alternatively, parts of first copy 220 and second 230 are combined without neutral copy 210. Encryption module 304 can perform the above operation. Encryption module 304 or key management module 306 can send the unique keys (i.e., Keys 1 through 3) to a client to decrypt the content.

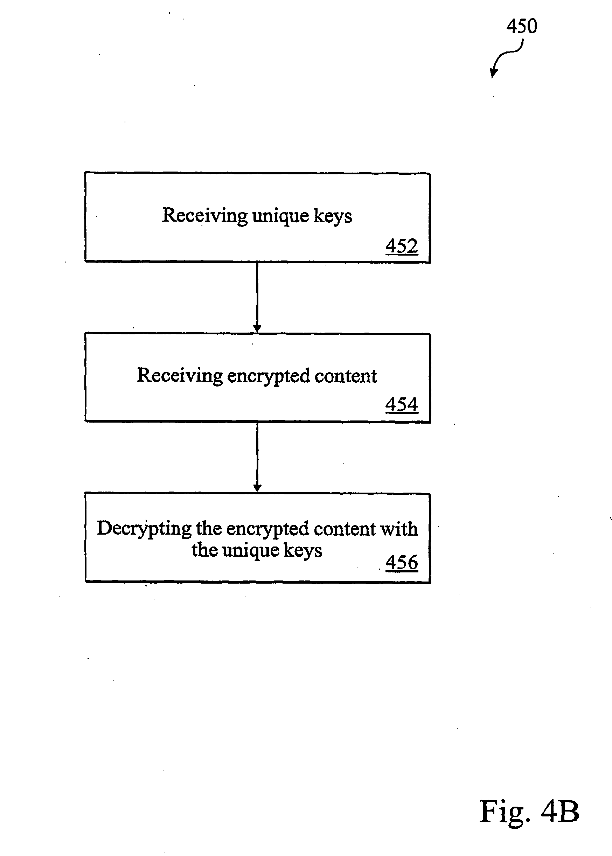

**FIG. 4B** illustrates a flow chart of an operation 450 to decrypt encrypted content. Initially, operation 450 begins at operation 452.

At operation 452, unique keys are received, which are used by content server 104 to encrypt content. For example, receiving module 308 within client 100 can receive the unique keys. Receiving module 308 can forward the unique keys to key management module 312 or decryption 310 within client 100.

At operation 454, the encrypted content is received. The encrypted content is "double-illuminated" to refer that at least portions thereof are duplicated and watermarked with different identifiers. For example, client 100 can receive the encrypted content of operation 400 via receiving module 308. Encrypted content, however, can be received before the unique keys are received in operation 452.

At operation 456, the encrypted content is decrypted. For example, decryption module 310 can decrypt the encrypted content from content server 104 using the received unique keys.

### Waterplexing Example

The following examples with respect to **FIGS. 5****,** **6A****,** **6B** and **7** describe a method and system to identify uniquely multicast content with each of multiple recipients. The following examples describe a "waterplexing" process by encrypting, e.g., a single data-stream of video content, in a manner that allows numerous unlocking keys to be distributed to a plurality of recipients ("customers"). Each key can decrypt the content into a unique form. In one example the content is encrypted once and then distributed to multiple clients. In order for the content to be unlocked and viewed, one or more unique keys are required to decrypt the content. That is, each unique key will cause the resulting decrypted content to be universally unique and viewable.

**FIG. 5** illustrates a block diagram 500 of content server 104 for unicasting keys and multicasting encrypted content. Referring to **FIG. 5****,** content server 104 includes content storage 106 for storing, content, which is coupled to server media module 108. Server media module 108 may include a watermarking module 506 coupled to content storage 106 and encryption module 507, which is coupled to keys database 508. Each of these modules can be a separate processing device or hardware and/or software modules to process instructions or code for performing the operations described herein.

Content storage 106 stores content that is to be multicasted. For example, content storage 106 can store text, audio, and video content. In the following examples content storage 106 stores a stream of video data. Watermarking module 506 processes the stream of video data in content storage 106.
Watermarking module 506 may add unique watermarks or stamps to redundant data (e.g., frames or packets within the stream of video data) for a waterplexing process. That is, redundant pieces (e.g., "frames") of data are included in the stream of video data. The watermarks or stamps refer to any modification to one or more frames of video that result in detectable information being added to those frames. Watermarking module 506 forwards the watermarked frames to encrypting module 507.

Encrypting module 507 encrypts the watermarked frames. Because some frames are repeated in the video stream, encrypting module 507 can uniquely encrypt each frame of repeated frames. As such, unique encryption and decryption keys can be used and associated with each redundant frame. Keys database 508 can store such keys. Keys database 508 can include one or more tables of keys, which are mapped for unique clients/users/customers ("customer"), which will be described below. Encrypting module 507 may unicast unique keys from keys database 508 for individual customers. Encrypting module 507 can also multicast watermarked content, which has been enaypted, to all the customers requesting to receive the Multicast Alternatively, encrypting module 507 can multicast first and then unicast the keys.

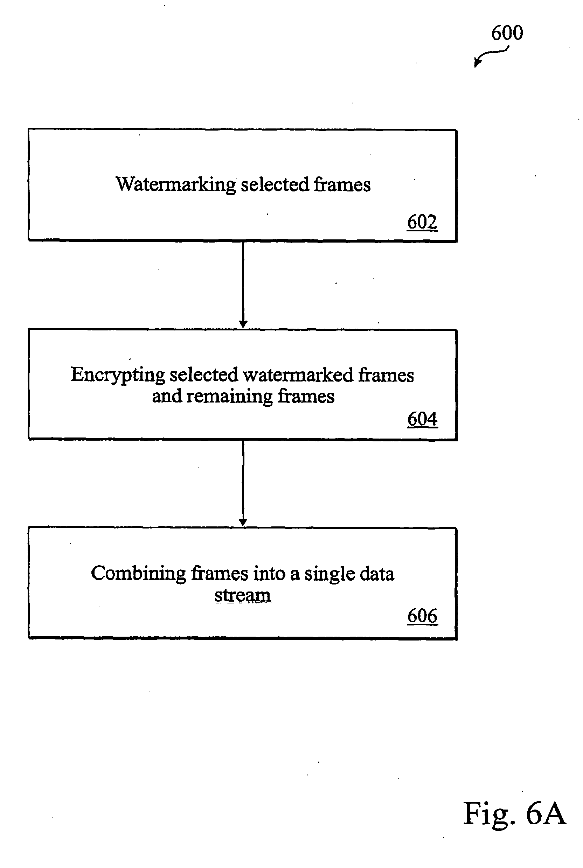

**FIG. 6A** illustrates a flow chart of an operation 600 to create a single stream of data having encrypted video frames. Initially, operation 600 begins at operation 602.

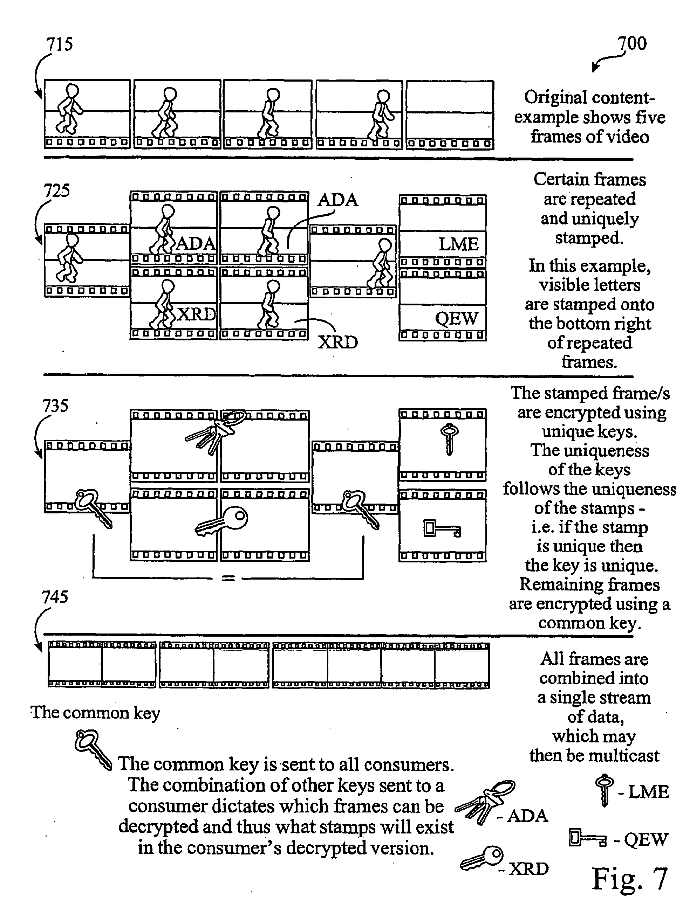

At operation 602, selected frames within the stream of video data stored in content storage 106 are watermarked. For example, as shown in **FIG. 7****,** frames 715 represents original content of 5 frames. Watermarking module 506 can provide unique watermarks to the repeated frames. The amount of repetition that occurs is not relevant except that repetition does occur, which allows for part of the whole to be uniquely encrypted. In the example of **FIG. 7****,** visible letters are stamped onto the bottom right of the repeated frames as shown in frames 725.

At operation 604, the selected watermarked frames and remaining frames are encrypted with unique keys. As shown in frames 735 of **FIG. 7****,** the stamped frames are encrypted using unique keys. that follow the uniqueness of the stamps. That is, if the stamp is unique then the key is unique. The remaining frames are encrypted using a common key. For example, the frames stamped with "ADA," "LME," "XRD," and "QEW" are encrypted with unique keys. The non-stamped or watermarked frames are encrypted with the common key.

At operation 606, the frames 735 are combined into a single data stream as shown in frames 745 of **FIG. 7****.** The single stream of data, i.e., frames 745 can be multicasted to requesting customers. The common key may be sent to all customers. The combination of the other keys set to a customer dictates which frames can be decrypted and thus which will be in the customer's decrypted version. The decryption keys unique to each customer may be unicasted to the customer.

Since frames can be repeated and uniquely stamped and uniquely encrypted, a two-dimensional array of key/stamp pairs can be constructed for any given item of content. The array has a width equal to the number of times a frame is selected for unique stamping, and has a depth equal to the number of times a frame is repeated.

As shown in **FIG**. **7**, individual frames in frames 725 were selected for watermarking of stamping. Here, two watermarks or stamps are used thus requiring an array with a width of two. Within each stamping selection, each frame is repeated twice, which requires a depth of 2. As shown in **Table 1** below, a 2x2 array is shown mapping unique keys to individual stamp.

**Table 1**

| **Frame 2 & 3** | **Frame 5** |
|---|---|
| Key1 = ADA | Key3 = LME |
| Key2 = XRD | Key4 = QEW |

By choosing which keys to send to any given customer, it can be determined as to which stamps will be present in the content once decrypted. For example, the above array has four potential combinations. Thus, four uniquely identifiable versions could exist after decryption. An exemplary Table 2 is shown below associating individual customers with which keys are to be received based on the stamps in the content.

**Table 2**

| **Consumer** | **Keys received** | **Stamps in content** |
|---|---|---|
| Michael | Key 1, Key 3 | ADA, LME |
| Donald | Key 2, Key 4 | XRD, QEW |
| Jane | Key 1, Brey 4 | ADA, QEW |
| Mary | Key 2, Key 3 | XRD, LME |

With repetition of parts of a video-stream, video content can be encrypted in a manner that guarantees uniqueness of the decrypted version. This concept relies on the fact that no customer is given all of the keys required for an item of content, but is given a unique combination of keys just sufficient to decrypt the content to a viewable state.

Most popular video compression techniques involve using key frames (or I frames) to begin a sequence of animation, which is then followed by data that describes how the remaining frames sequentially differ from each other. Since the waterplexing example described above relies on repetition of video frames, a waterplexing engine can be used in conjunction with a video compression engine to determine where key-frames occur in order to provide a compression solution.

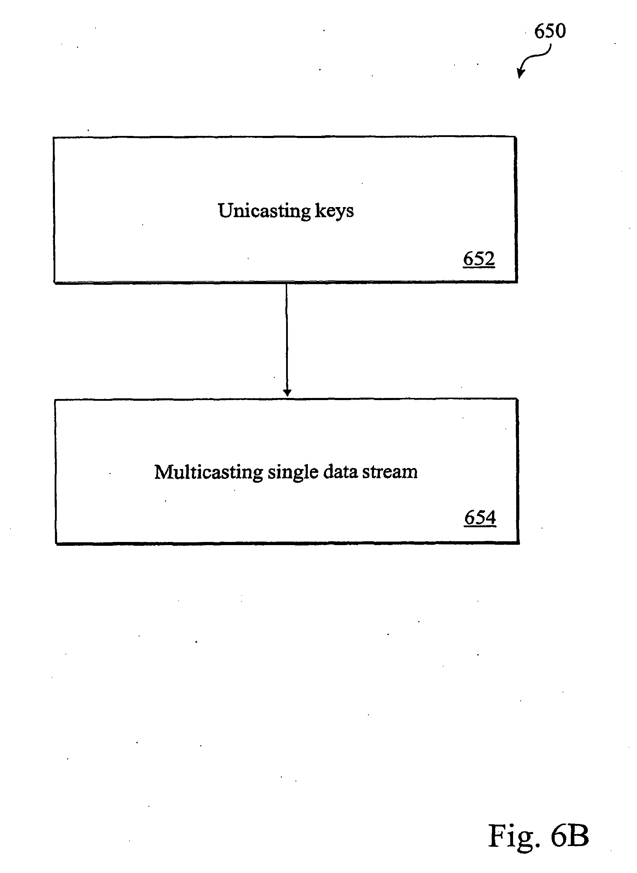

**FIG. 6B** illustrates a flow chart of an operation 650 of distributing keys and the single stream of data of **FIG. 6A**. Initially, operation 650 begins at operation 652.

At operation 652, the unique keys are unicasted. For example, the keys in **Tables 1** and **2** above are unicasted to one or more clients or customers.

At operation 654, the single data stream having unique watermarks and encrypted with unique keys is multicasted. For example, the frames 745 shown in **FIG. 7** are multicasted to one or more clients or customers. The order of operation 652 and operation 654 can be reverted.

Thus, the above operations described in **FIGS. 6A** and **6B** show how to uniquely associate multicast content with each of multiple clients or customers.

### Exemplary Digital Processing or Computing System

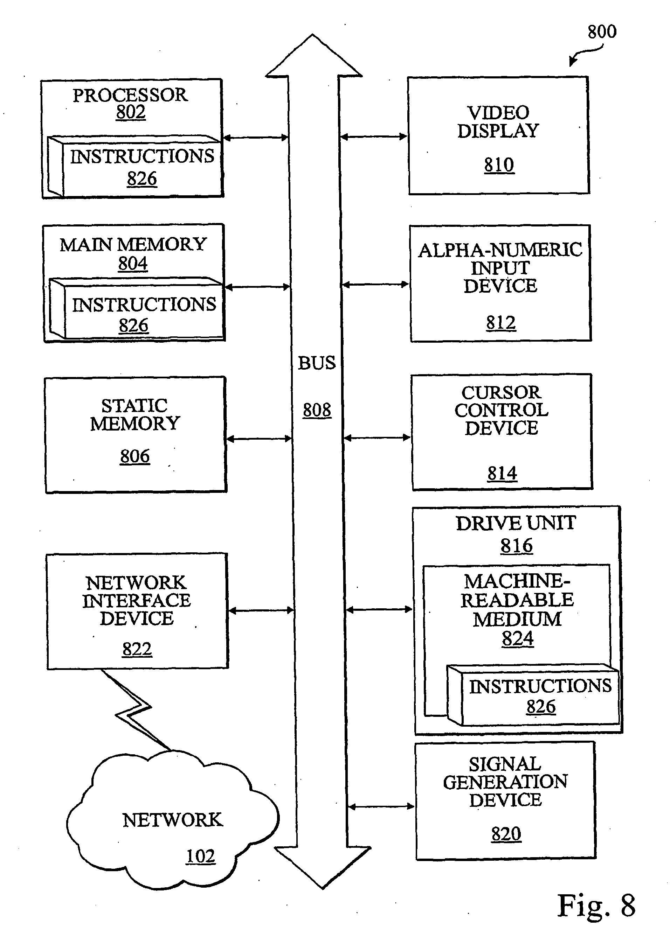

FIG. 8 is a block diagram of an exemplary digital processing system 800 for a content server or a client. For example, digital processing system 800 can represent content server 104 as described in FIGS. 1, 2, and 5. Digital processing system 800 may store a set of instructions for causing the system to perform any of the operations as explained above. Digital processing system 800 can also represent a client on a network or other types of network devices, which include a network router, a network switch, or a network bridge or gateway. Digital processing system 800 can also represent a client being a portable electronic device such as, for example, a personal data assistant, a mobile device, a web appliance, or any other type of machine capable of executing a sequence of instructions that specify actions to be taken by that machine.

Referring to FIG. 8, digital processing system 800 includes a bus 808 coupled to a central processing unit (CPU) 802, main memory 804, static memory 806, network interface 822, video display 810, alpha-numeric input device 812, cursor control device 814, drive unit 816, and signal generation device 820. The devices coupled to bus 808 can use bus 808 to communicate information or data to each other. Furthermore, the devices of digital processing system 800 are exemplary in which one or more devices can be omitted or added. For example, one or more memory devices can be used for digital processing system 800.

The CPU 802 can process instructions 826 or instructions 826 stored in main memory 804 or a machine-readable medium 824 within drive unit 816 via bus 808. CPU 802 can process and execute instructions 826 to implement the
operations as described in FIGS. 2A, 2B, 6A, and 6B. Bus 808 is a communication medium for communicating data or information for digital processing system 800.

Main memory 804 can be, e.g., a random access memory (RAM) or some other dynamic storage device. Main memory 804 stores instructions 826, which can be used by CPU 802. Main memory 804 may also store temporary variables or other intermediate information during execution of instructions by CPU 802. Static memory 806, can be, e.g., a read only memory (ROM) and/or other static storage devices, for storing information or instructions, which can also be used by CPU 802. Drive unit 816 can be, e.g., a hard or floppy disk drive unit or optical disk drive unit, having a machine-readable medium 824 storing instructions 826. The machine-readable medium 824 can also store other types of information or data.

Video display 810 can be, e.g., a cathode ray tube (CRT) or liquid crystal display (LCD). Video display device 810 displays information or graphics to a user. Alpha-numeric input device 812 is an input device (e.g., a keyboard) for communicating information and command selections to digital processing system 800. Cursor control device 814 can be, e.g., a mouse, a trackball, or cursor direction keys, for controlling movement of an object on video display 810. Signal generation device 820 can be, e.g., a speaker or a microphone.

Digital processing system 800 can be connected to a network 102 via a network interface device 822. Network interface 822 can connect to a network such as, for example, a local area network (LAN), wide area network (WAN), token ring network, Internet, or other like networks. Network interface device 822 can also support varying network protocols such as, for example, hypertext transfer protocol (HTTP), asynchronous transfer mode (ATM), fiber distributed data interface (PDDI), frame relay, or other like protocols.

Thus, a method and system to uniquely identify multicast content with each of multiple recipients have been described. In the foregoing specification, the invention has been described with reference to specific examples thereof. It will, however, be evident that various modifications and changes may be made thereto without departing from broader scope of the invention as set forth in the appended claims. The specification and drawings are, accordingly, to be regarded in an illustrative sense rather than a restrictive sense.

## Claims

1. A computing system comprising:
watermarking means (506) arranged to watermark a first copy of a section of content and a second copy of said section of content with, respectively, a first watermark and a second watermark, said first watermark being different from said second watermark;
encrypting means (507) arranged to encrypt the first watermarked copy of said section of content using a first key and the second watermarked copy of said section of content using a second key, said first key being different from said second key; and
means arranged to form a single stream (745) of data, said single stream of data comprising, for at least said section of content, both the first encrypted watermarked copy of said section of content and the second encrypted watermarked copy of said section of content.

2. The computing system according to claim 1 comprising supplying means arranged to:
supply the single stream of data to a first client and a second client; and
supply at least the first key to the first client and the second key to the second client, so that the first client is enabled to decrypt the first encrypted watermarked copy of said section of content, and so that the second client is enabled to decrypt the second encrypted watermarked copy of said section of content.

3. The computing system according to claim 1, wherein:
said watermarking means (506) is arranged to watermark, for each section of a plurality of sections of said content, a first copy of said section of content with a respective first watermark and a second copy of said section of content with a respective second watermark, said first watermark being different from said second watermark;
said encrypting means (507) is arranged, for each section of said plurality of sections of said content, to encrypt the respective first watermarked copy of said section of content using a respective first key and the respective second watermarked copy of said section of content using a respective second key, said first key being different from said second key; and
said single stream of data comprises, for each section of said plurality of sections of said content, both the respective first encrypted watermarked copy of said section of content and the respective second encrypted watermarked copy of said section of content.

4. The computing system according to claim 3, comprising supplying means arranged to:
supply the single stream of data to each client of a plurality of clients; and
supply, to each client of the plurality of clients, a respective set of keys unique to said client, wherein said set of keys comprises, for each section of said plurality of sections of said content, a corresponding key for decrypting one of the encrypted watermarked copies of said section of content, so that each of the plurality of clients is enabled to decrypt said single stream of data to generate content embodying a unique sequence of watermarks.

5. The computing system according to claim 2 or 4, wherein said supplying means is arranged to supply said single stream of data by multicasting said single stream of data.

6. The computing system according to claim 2, wherein said supplying means is arranged to supply the first key to the first client and the second key to the second client by unicasting the first key to the first client and the second key to the second client.

7. The computing system according to claim 4, wherein said supplying means is arranged to supply, to each client of the plurality of clients, said respective set of keys unique to said client by unicasting to said client said respective set of keys unique to said client.

8. The computing system according to any one of the preceding claims, wherein the first watermark includes "0s" and the second watermark includes "1s".

9. The computing system according to any one of the preceding claims, wherein:
said encrypting means is arranged to encrypt an unwatermarked part of said content using a third key, said third key being different from said first key and said second key; and
said single stream of data comprises said encrypted unwatermarked part of said content.

10. The computing system according to claim 9, when dependent on claim 2, wherein said supplying means is arranged to supply said third key to said first client and said second client.

11. The computing system according to claim 9, when dependent on claim 4, wherein said supplying means is arranged to supply said third key to each client of said plurality of clients.

12. A computer-implemented method comprising:
watermarking a first copy of a section of content and a second copy of said section of content with, respectively, a first watermark and a second watermark, said first watermark being different from said second watermark;
encrypting the first watermarked copy of said section of content using a first key and the second watermarked copy of said section of content using a second key, said first key being different from said second key; and
forming a single stream (745) of data, said single stream of data comprising, for at least said section of content, both the first encrypted watermarked copy of said section of content and the second encrypted watermarked copy of said section of content.

13. The computer-implemented method according to claim 12 comprising:
supplying the single stream of data to a first client and a second client; and
supplying at least the first key to the first client and the second key to the second client, so that the first client is enabled to decrypt the first encrypted watermarked copy of said section of content, and so that the second client is enabled to decrypt the second encrypted watermarked copy of said section of content.

14. The computer-implemented method according to claim 12, wherein:
said watermarking comprises, for each section of a plurality of sections of said content, watermarking a first copy of said section of content with a respective first watermark and a second copy of said section of content with a respective second watermark, said first watermark being different from said second watermark;
said encrypting comprises, for each section of said plurality of sections of said content, encrypting the respective first watermarked copy of said section of content using a respective first key and the respective second watermarked copy of said section of content using a respective second key, said first key being different from said second key; and
said single stream of data comprises, for each section of said plurality of sections of said content, both the respective first encrypted watermarked copy of said section of content and the respective second encrypted watermarked copy of said section of content.

15. The computer-implemented method according to claim 14, comprising:
supplying the single stream of data to each client of a plurality of clients; and
supplying, to each client of the plurality of clients, a respective set of keys unique to said client, wherein said set of keys comprises, for each section of said plurality of sections of said content, a corresponding key for decrypting one of the encrypted watermarked copies of said section of content, so that each of the plurality of clients is enabled to decrypt said single stream of data to generate content embodying a unique sequence of watermarks.

16. The computer-implemented method according to claim 13 or 15, wherein supplying said single stream of data comprises multicasting said single stream of data.

17. The computer-implemented method according to claim 13, wherein supplying the first key to the first client and the second key to the second client comprises unicasting the first key to the first client and the second key to the second client.

18. The computer-implemented method according to claim 15, wherein supplying, to each client of the plurality of clients, said respective set of keys unique to said client comprises unicasting to said client said respective set of keys unique to said client.

19. The computer-implemented method according to any one of claims 12 to 18, wherein the first watermark includes "0s" and the second watermark includes "1s".

20. The computer-implemented method according to any one of claims 12 to 19, comprising encrypting an unwatermarked part of said content using a third key, said third key being different from said first key and said second key; wherein said single stream of data comprises said encrypted unwatermarked part of said content.

21. The computer-implemented method according to claim 20, when dependent on claim 13, comprising supplying said third key to said first client and said second client.

22. The computer-implemented method according to claim 20, when dependent on claim 15, comprising supplying said third key to each client of said plurality of clients.

23. A machine-readable medium carrying processor instructions which, if executed by a processor (802), instruct said processor (802) to perform the method of claim 12, the processor instructions comprising:
instructions for watermarking a first copy of a section of content and a second copy of said section of content with, respectively, a first watermark and a second watermark, said first watermark being different from said second watermark;
instructions for encrypting the first watermarked copy of said section of content using a first key and the second watermarked copy of said section of content using a second key, said first key being different from said second key; and
instructions for forming a single stream (745) of data, said single stream of data comprising, for at least said section of content, both the first encrypted watermarked copy of said section of content and the second encrypted watermarked copy of said section of content.

24. The machine-readable medium according to claim 23, wherein the processor instructions comprise:
instructions for supplying the single stream of data to a first client and a second client; and
instructions for supplying at least the first key to the first client and the second key to the second client, so that the first client is enabled to decrypt the first encrypted watermarked copy of said section of content, and so that the second client is enabled to decrypt the second encrypted watermarked copy of said section of content.

25. The machine-readable medium according to claim 24, wherein:
said watermarking comprises, for each section of a plurality of sections of said content, watermarking a first copy of said section of content with a respective first watermark and a second copy of said section of content with a respective second watermark, said first watermark being different from said second watermark;
said encrypting comprises, for each section of said plurality of sections of said content, encrypting the respective first watermarked copy of said section of content using a respective first key and the respective second watermarked copy of said section of content using a respective second key, said first key being different from said second key; and
said single stream of data comprises, for each section of said plurality of sections of said content, both the respective first encrypted watermarked copy of said section of content and the respective second encrypted watermarked copy of said section of content.

26. The machine-readable medium according to claim 25, wherein the processor instructions comprise:
instructions for supplying the single stream of data to each client of a plurality of clients; and
instructions for supplying, to each client of the plurality of clients, a respective set of keys unique to said client, wherein said set of keys comprises, for each section of said plurality of sections of said content, a corresponding key for decrypting one of the encrypted watermarked copies of said section of content, so that each of the plurality of clients is enabled to decrypt said single stream of data to generate content embodying a unique sequence of watermarks.

27. The machine-readable medium according to claim 24 or 26, wherein supplying said single stream of data comprises multicasting said single stream of data.

28. The machine-readable medium according to claim 24, wherein supplying the first key to the first client and the second key to the second client comprises unicasting the first key to the first client and the second key to the second client.

29. The machine-readable medium according to claim 26, wherein supplying, to each client of the plurality of clients, said respective set of keys unique to said client comprises unicasting to said client said respective set of keys unique to said client.

30. The machine-readable medium according to any one of claims 23 to 29, wherein the first watermark includes "0s" and the second watermark includes "1s".

31. The machine-readable medium according to any one of claims 23 to 30, wherein the processor instructions comprise instructions for encrypting an unwatermarked part of said content using a third key, said third key being different from said first key and said second key; wherein said single stream of data comprises said encrypted unwatermarked part of said content.

32. The machine-readable medium according to claim 31, when dependent on claim 24, wherein the processor instructions comprise instructions for supplying said third key to said first client and said second client.

33. The machine-readable medium according to claim 31, when dependent on claim 26, wherein the processor instructions comprise instructions for supplying said third key to each client of said plurality of clients.

## Patentansprüche

1. Rechensystem, umfassend:
ein Wasserzeichen-Mittel (506), das dazu angeordnet ist, eine erste Kopie von einem Abschnitt von Inhalt und eine zweite Kopie von dem Abschnitt von Inhalt jeweils mit einem ersten Wasserzeichen und einem zweiten Wasserzeichen zu versehen, wobei das erste Wasserzeichen sich von dem zweiten Wasserzeichen unterscheidet,
ein Verschlüsselungsmittel (507), das dazu angeordnet ist, die erste mit Wasserzeichen versehene Kopie von dem Abschnitt von Inhalt unter Verwendung von einem ersten Schlüssel zu verschlüsseln und die zweite mit Wasserzeichen versehene Kopie von dem Abschnitt von Inhalt unter Verwendung von einem zweiten Schlüssel zu verschlüsseln, wobei der erste Schlüssel sich von dem zweiten Schlüssel unterscheidet und
ein Mittel, das dazu angeordnet ist, einen einzelnen Datenstrom (745) zu bilden, wobei der einzelne Datenstrom wenigstens für den Abschnitt von Inhalt sowohl die erste verschlüsselte mit Wasserzeichen versehene Kopie von dem Abschnitt von Inhalt als auch die zweite verschlüsselte mit Wasserzeichen versehene Kopie von dem Abschnitt von Inhalt umfasst.

2. Rechensystem nach Anspruch 1, umfassend ein Liefermittel, das dazu angeordnet ist:
den einzelnen Datenstrom an einen ersten Client und an einen zweiten Client zu liefern, und
wenigstens den ersten Schlüssel an den ersten Client und den zweiten Schlüssel an den zweiten Client zu liefern, so dass der erste Client dazu in die Lage versetzt wird, die erste verschlüsselte mit Wasserzeichen versehene Kopie von dem Abschnitt von Inhalt zu entschlüsseln, und so dass der zweite Client dazu in die Lage versetzt wird, die zweite verschlüsselte mit Wasserzeichen versehene Kopie von dem Abschnitt von Inhalt zu entschlüsseln.

3. Rechensystem nach Anspruch 1, wobei:
das Wasserzeichen-Mittel (506) dazu angeordnet ist, für jeden Abschnitt einer Mehrzahl von Abschnitten von dem Inhalt eine erste Kopie von dem Abschnitt von Inhalt mit einem jeweiligen ersten Wasserzeichen und eine zweite Kopie von dem Abschnitt von Inhalt mit einem jeweiligen zweiten Wasserzeichen zu versehen, wobei sich das erste Wasserzeichen von dem zweiten Wasserzeichen unterscheidet,
das Verschlüsselungsmittel (507) dazu angeordnet ist, für jeden Abschnitt von der Mehrzahl von Abschnitten von dem Inhalt die jeweilige erste mit Wasserzeichen versehene Kopie von dem Abschnitt von Inhalt unter Verwendung von einem jeweiligen ersten Schlüssel und
die jeweilige zweite mit Wasserzeichen versehene Kopie von dem Abschnitt von Inhalt unter Verwendung von einem jeweiligen zweiten Schlüssel zu verschlüsseln, wobei der erste Schlüssel sich von dem zweiten Schlüssel unterscheidet, und
der einzelne Datenstrom für jeden Abschnitt von der Mehrzahl von Abschnitten von dem Inhalt sowohl die jeweilige erste verschlüsselte mit Wasserzeichen versehene Kopie von dem Abschnitt von Inhalt als auch die jeweilige zweite verschlüsselte mit Wasserzeichen versehene Kopie von dem Abschnitt von Inhalt umfasst.

4. Rechensystem nach Anspruch 3, umfassend ein Liefermittel, das dazu angeordnet ist:
den einzelnen Datenstrom an jeden Client von einer Mehrzahl von Clients zu liefern, und
an jeden Client aus der Mehrzahl von Clients einen jeweiligen Client-spezifischen Satz von Schlüsseln zu liefern, wobei der Satz von Schlüsseln für jeden Abschnitt von der Mehrzahl von Abschnitten von dem Inhalt einen entsprechenden Schlüssel zum Entschlüsseln einer der verschlüsselten mit Wasserzeichen versehenen Kopien von dem Abschnitt von Inhalt umfasst, so dass jeder von der Mehrzahl von Clients dazu in die Lage versetzt wird, den einzelnen Datenstrom zu entschlüsseln, um Inhalt zu erzeugen, der eine spezifische Sequenz von Wasserzeichen verkörpert.

5. Rechensystem nach Anspruch 2 oder 4, wobei das Liefermittel dazu angeordnet ist, den einzelnen Datenstrom durch Übertragen des einzelnen Datenstroms per Multicast zu liefern.

6. Rechensystem nach Anspruch 2, wobei das Liefermittel dazu angeordnet ist, dem ersten Client den ersten Schlüssel zu liefern und dem zweiten Client den zweiten Schlüssel zu liefern, indem der erste Schlüssel an den ersten Client und der zweite Schlüssel an den zweiten Client per Unicast übertragen wird.

7. Rechensystem nach Anspruch 4, wobei das Liefermittel dazu angeordnet ist, jedem Client aus der Mehrzahl von Clients den jeweiligen Client-spezifischen Satz von Schlüsseln zu liefern, indem er den jeweiligen Client-spezifischen Satz von Schlüsseln an den Client per Unicast überträgt.

8. Rechensystem nach einem der vorhergehenden Ansprüche, wobei das erste Wasserzeichen "0en" umfasst und das zweite Wasserzeichen "1en" umfasst.

9. Rechensystem einem der vorhergehenden Ansprüche, wobei:
das Verschlüsselungsmittel dazu angeordnet ist, einen nicht mit Wasserzeichen versehenen Teil von dem Inhalt unter Verwendung von einem dritten Schlüssel zu verschlüsseln, wobei der dritte Schlüssel sich von dem ersten Schlüssel und dem zweiten Schlüssel unterscheidet, und
der einzelne Datenstrom den verschlüsselten nicht mit Wasserzeichen versehenen Teil von dem Inhalt umfasst.

10. Rechensystem nach Anspruch 9, unter Rückbezug auf Anspruch 2, wobei das Liefermittel dazu angeordnet ist, dem ersten Client und dem zweiten Client den dritten Schlüssel zu liefern.

11. Rechensystem nach Anspruch 9 unter Rückbezug auf Anspruch 4, wobei das Liefermittel dazu angeordnet ist, jedem Client der Mehrzahl von Clients den dritten Schlüssel zu liefern.

12. Computer-implementiertes Verfahren, umfassend:
Versehen einer ersten Kopie von einem Abschnitt von Inhalt und einer zweiten Kopie von dem Abschnitt von Inhalt jeweils mit einem ersten Wasserzeichen und einem zweiten Wasserzeichen,
wobei das erste Wasserzeichen sich von dem zweiten Wasserzeichen unterscheidet,
Verschlüsseln der ersten mit Wasserzeichen versehenen Kopie von dem Abschnitt von Inhalt unter Verwendung von einem ersten Schlüssel und von der zweiten mit Wasserzeichen versehenen Kopie von dem Abschnitt von Inhalt unter Verwendung von einem zweiten Schlüssel,
wobei der erste Schlüssel sich von dem zweiten Schlüssel unterscheidet, und
Bilden von einem einzelnen Datenstrom (745), wobei der einzelne Datenstrom für wenigstens den Abschnitt von Inhalt sowohl die erste verschlüsselte mit Wasserzeichen versehene Kopie von dem Abschnitt von Inhalt als auch die zweite verschlüsselte mit Wasserzeichen versehene Kopie von dem Abschnitt von Inhalt umfasst.

13. Computer-implementiertes Verfahren nach Anspruch 12, umfassend:
Liefern des einzelnen Datenstroms an einen ersten Client und an einen zweiten Client und
Liefern des wenigstens ersten Schlüssels an den ersten Client und des zweiten Schlüssels an den zweiten Client, so dass der erste Client dazu in die Lage versetzt wird, die erste verschlüsselte mit Wasserzeichen versehene Kopie von dem Abschnitt von Inhalt zu entschlüsseln, und so dass der zweite Client dazu in die Lage versetzt wird, die zweite verschlüsselte mit Wasserzeichen versehene Kopie von dem Abschnitt von Inhalt zu entschlüsseln.

14. Computer-implementiertes Verfahren nach Anspruch 12, wobei:
das Versehen mit Wasserzeichen umfasst, für jeden Abschnitt aus einer Mehrzahl von Abschnitten von dem Inhalt eine erste Kopie von dem Abschnitt von Inhalt mit einem jeweiligen ersten Wasserzeichen zu versehen und eine zweite Kopie von dem Abschnitt von Inhalt mit einem jeweiligen zweiten Wasserzeichen zu versehen, wobei das erste Wasserzeichen sich von dem zweiten Wasserzeichen unterscheidet,
wobei das Verschlüsseln umfasst, für jeden Abschnitt von der Mehrzahl von Abschnitten von dem Inhalt die jeweilige erste mit Wasserzeichen versehene Kopie von dem Abschnitt von Inhalt unter Verwendung von einem jeweiligen ersten Schlüssel zu verschlüsseln und die jeweilige zweite mit Wasserzeichen versehene Kopie von dem Abschnitt von Inhalt unter Verwendung von einem jeweiligen zweiten Schlüssel zu verschlüsseln, wobei der erste Schlüssel sich von dem zweiten Schlüssel unterscheidet, und
wobei der einzelne Datenstrom für jeden Abschnitt von der Mehrzahl von Abschnitten von dem Inhalt sowohl die jeweilige erste verschlüsselte mit Wasserzeichen versehene Kopie von dem Abschnitt von Inhalt als auch die jeweilige zweite verschlüsselte mit Wasserzeichen versehene Kopie von dem Abschnitt von Inhalt umfasst.

15. Computer-implementiertes Verfahren nach Anspruch 14, umfassend:
Liefern des einzelnen Datenstroms an jeden Client einer Mehrzahl von Clients und
Liefern von einem jeweiligen Client-spezifischen Satz von Schlüsseln an jeden Client aus der Mehrzahl von Clients, wobei der Satz von Schlüsseln für jeden Abschnitt von der Mehrzahl von Abschnitten von dem Inhalt einen entsprechenden Schlüssel zum Entschlüsseln von einer der verschlüsselten mit Wasserzeichen versehenen Kopien von dem Abschnitt von Inhalt umfasst, so dass jeder von der Mehrzahl von Clients dazu in die Lage versetzt wird, den einzelnen Datenstrom zu entschlüsseln, um Inhalt zu erzeugen, der eine spezifische Sequenz von Wasserzeichen verkörpert.

16. Computer-implementiertes Verfahren nach Anspruch 13 oder 15, wobei ein Liefern von dem einzelnen Datenstrom umfasst, den einzelnen Datenstrom per Multicast zu übertragen.

17. Computer-implementiertes Verfahren nach Anspruch 13, wobei ein Liefern von dem ersten Schlüssel an den ersten Client und von dem zweiten Schlüssel an den zweiten Client umfasst, den ersten Schlüssel an den ersten Client und den zweiten Schlüssel an den zweiten Client per Unicast zu übertragen.

18. Computer-implementiertes Verfahren nach Anspruch 15, wobei ein Liefern von dem jeweiligen Client-spezifischen Satz von Schlüsseln an jeden Client aus der Mehrzahl von Clients umfasst, an den Client den jeweiligen Client-spezifischen Satz von Schlüsseln per Unicast zu übertragen.

19. Computer-implementiertes Verfahren nach einem der Ansprüche 12 bis 18, wobei das erste Wasserzeichen "0en" umfasst und das zweite Wasserzeichen "1en" umfasst.

20. Computer-implementiertes Verfahren nach einem der Ansprüche 12 bis 19, umfassend ein Verschlüsseln eines nicht mit Wasserzeichen versehenen Teils von dem Inhalt unter Verwendung von einem dritten Schlüssel, wobei sich der dritte Schlüssel von dem ersten Schlüssel und von dem zweiten Schlüssel unterscheidet, wobei der einzelne Datenstrom den verschlüsselten nicht mit Wasserzeichen versehenen Teil von dem Inhalt umfasst.

21. Computer-implementiertes Verfahren nach Anspruch 20 unter Rückbezug auf Anspruch 13, umfassend ein Liefern des dritten Schlüssels an den ersten Client und den zweiten Client.

22. Computer-implementiertes Verfahren nach Anspruch 20 unter Rückbezug auf Anspruch 15, umfassend ein Liefern des dritten Schlüssels an jeden Client von der Mehrzahl von Clients.

23. Maschinenlesbares Medium, welches Prozessor-Anweisungen trägt, die bei Ausführung durch einen Prozessor (802) den Prozessor (802) anweisen, das Verfahren nach Anspruch 12 durchzuführen, wobei die Prozessor-Anweisungen umfassen:
Anweisungen, um eine erste Kopie von einem Abschnitt von Inhalt und
eine zweite Kopie von dem Abschnitt von Inhalt jeweils mit einem ersten Wasserzeichen und einem zweiten Wasserzeichen zu versehen, wobei das erste Wasserzeichen sich von dem zweiten Wasserzeichen unterscheidet,
Anweisungen zum Verschlüsseln der ersten mit Wasserzeichen versehenen Kopie von dem Abschnitt von Inhalt unter Verwendung von einem ersten Schlüssel und von der zweiten mit Wasserzeichen versehenen Kopie von dem Abschnitt von Inhalt unter Verwendung von einem zweiten Schlüssel, wobei sich der erste Schlüssel von dem zweiten Schlüssel unterscheidet, und
Anweisungen zum Bilden eines einzelnen Datenstroms (745), wobei der einzelne Datenstrom für wenigstens den Abschnitt von Inhalt sowohl die erste verschlüsselte mit Wasserzeichen versehene Kopie von dem Abschnitt von Inhalt als auch die zweite verschlüsselte mit Wasserzeichen versehene Kopie von dem Abschnitt von Inhalt umfasst.

24. aschinenlesbares Medium nach Anspruch 23, wobei die Prozessor-Anweisungen umfassen:
Anweisungen zum Liefern des einzelnen Datenstroms an einen ersten Client und an einen zweiten Client und
Anweisungen zum Liefern wenigstens des ersten Schlüssels an den ersten Client und des zweiten Schlüssels an den zweiten Client, so dass der erste Client dazu in die Lage versetzt wird, die erste verschlüsselte mit Wasserzeichen versehene Kopie von dem Abschnitt von Inhalt zu entschlüsseln, und dass der zweite Client dazu in die Lage versetzt wird, die zweite verschlüsselte mit Wasserzeichen versehene Kopie von dem Abschnitt von Inhalt zu entschlüsseln.

25. Maschinenlesbares Medium nach Anspruch 24, wobei das Versehen mit Wasserzeichen umfasst, für jeden Abschnitt aus einer Mehrzahl von Abschnitten von dem Inhalt eine erste Kopie von dem Abschnitt von Inhalt mit einem jeweiligen ersten Wasserzeichen zu versehen und eine zweite Kopie von dem Abschnitt von Inhalt mit einem jeweiligen zweiten Wasserzeichen zu versehen, wobei sich das erste Wasserzeichen von dem zweiten Wasserzeichen unterscheidet, wobei das Verschlüsseln umfasst, für jeden Abschnitt aus der Mehrzahl von Abschnitten von dem Inhalt die jeweilige erste mit Wasserzeichen versehene Kopie von dem Abschnitt von Inhalt unter Verwendung von einem jeweiligen ersten Schlüssel und die jeweilige zweite mit Wasserzeichen versehene Kopie von dem Abschnitt von Inhalt unter Verwendung von einem jeweiligen zweiten Schlüssels zu verschlüsseln, wobei der erste Schlüssel sich von dem zweiten Schlüssel unterscheidet, und wobei der einzelne Datenstrom für jeden Abschnitt von der Mehrzahl von Abschnitten von dem Inhalt sowohl die jeweilige erste verschlüsselte mit Wasserzeichen versehene Kopie von dem Abschnitt von Inhalt als auch die jeweilige zweite verschlüsselte mit Wasserzeichen versehene Kopie von dem Abschnitt von Inhalt umfasst.

26. Maschinenlesbares Medium nach Anspruch 25, wobei die Prozessor-Anweisungen umfassen:
Anweisungen zum Liefern des einzelnen Datenstroms an jeden Client aus einer Mehrzahl von Clients und
Anweisungen zum Liefern von einem jeweiligen Client-spezifischen Satz von Schlüsseln an jeden Client aus der Mehrzahl von Clients,
wobei der Satz von Schlüsseln für jeden Abschnitt der Mehrzahl von Abschnitten von dem Inhalt einen entsprechenden Schlüssel umfasst,
um eine von den verschlüsselten mit Wasserzeichen versehenen Kopien von dem Abschnitt von Inhalt zu entschlüsseln, so dass jeder aus der Mehrzahl von Clients dazu in die Lage versetzt wird, den einzelnen Datenstrom zu entschlüsseln, um Inhalt zu erzeugen, der eine spezifische Sequenz von Wasserzeichen verkörpert.

27. Maschinenlesbares Medium nach Anspruch 24 oder 26, wobei ein Liefern von dem einzelnen Datenstrom umfasst, den einzelnen Datenstrom per Multicast zu übertragen.

28. Maschinenlesbares Medium nach Anspruch 24, wobei ein Liefern des ersten Schlüssels an den ersten Client und des zweiten Schlüssels an den zweiten Client umfasst, den ersten Schlüssel an den ersten Client und den zweiten Schlüssel an den zweiten Client per Unicast zu übertragen.

29. Maschinenlesbares Medium nach Anspruch 26, wobei ein Liefern von dem jeweiligen Client-spezifischen Satz von Schlüsseln an jeden Client aus der Mehrzahl von Clients umfasst, an den Client den jeweiligen Client-spezifischen Satz von Schlüsseln per Unicast zu übertragen.

30. Maschinenlesbares Medium nach einem der Ansprüche 23 bis 29, wobei das erste Wasserzeichen "0en" umfasst und das zweite Wasserzeichen "1en" umfasst.

31. Maschinenlesbares Medium nach einem der Ansprüche 23 bis 30, wobei die Prozessor-Anweisungen Anweisungen umfassen, um einen nicht mit Wasserzeichen versehenen Teil von dem Inhalt unter Verwendung von einem dritten Schlüssel zu verschlüsseln, wobei der dritte Schlüssel sich von dem ersten Schlüssel und dem zweiten Schlüssel unterscheidet, wobei der einzelne Datenstrom den verschlüsselten nicht mit Wasserzeichen versehenen Teil von dem Inhalt umfasst.

32. aschinenlesbares Medium nach Anspruch 31 unter Rückbezug auf Anspruch 24, wobei die Prozessor-Anweisungen Anweisungen umfassen, um den dritten Schlüssel an den ersten Client und an den zweiten Client zu liefern.

33. Maschinenlesbares Medium nach Anspruch 31 unter Rückbezug auf Anspruch 26, wobei die Prozessor-Anweisungen Anweisungen umfassen, um den dritten Schlüssel an jeden Client aus der Mehrzahl von Clients zu liefern.

## Revendications

1. Système informatique comprenant :
un moyen de filigranage (506) agencé pour filigraner une première copie d'une section de contenu et une deuxième copie de ladite section de contenu avec, respectivement, un premier filigrane et un deuxième filigrane, ledit premier filigrane étant différent dudit deuxième filigrane ;
un moyen de cryptage (507) agencé pour crypter la première copie filigranée de ladite section de contenu en utilisant une première clé et la deuxième copie filigranée de ladite section de contenu en utilisant une deuxième clé, ladite première clé étant différente de ladite deuxième clé ; et
un moyen agencé pour former un flux unique (745) de données, ledit flux unique de données comprenant, pour au moins ladite section de contenu, à la fois la première copie filigranée cryptée de ladite section de contenu et la deuxième copie filigranée cryptée de ladite section de contenu.

2. Système informatique selon la revendication 1 comprenant un moyen de fourniture agencé :
pour fournir le flux unique de données à un premier client et à un deuxième client ; et
pour fournir au moins la première clé au premier client et la deuxième clé au deuxième client, de sorte que le premier client soit autorisé à décrypter la première copie filigranée cryptée de ladite section de contenu, et de sorte que le deuxième client soit autorisé à décrypter la deuxième copie filigranée cryptée de ladite section de contenu.

3. Système informatique selon la revendication 1, dans lequel :
ledit moyen de filigranage (506) est agencé pour filigraner, pour chaque section d'une pluralité de sections dudit contenu, une première copie de ladite section de contenu avec un premier filigrane respectif et une deuxième copie de ladite section de contenu avec un deuxième filigrane respectif, ledit premier filigrane étant différent dudit deuxième filigrane ;
ledit moyen de cryptage (507) est agencé, pour chaque section de ladite pluralité de sections dudit contenu, pour crypter la première copie filigranée respective de ladite section de contenu en utilisant une première clé respective et la deuxième copie filigranée respective de ladite section de contenu en utilisant une deuxième clé respective, ladite première clé étant différente de ladite deuxième clé; et
ledit flux unique de données comprend, pour chaque section de ladite pluralité de sections dudit contenu, à la fois la première copie filigranée cryptée respective de ladite section de contenu et la deuxième copie filigranée cryptée respective de ladite section de contenu.

4. Système informatique selon la revendication 3, comprenant un moyen de fourniture agencé :
pour fournir le flux unique de données à chaque client d'une pluralité de clients ; et
pour fournir, à chaque client de la pluralité de clients, un ensemble respectif de clés uniques audit client, où ledit ensemble de clés comprend, pour chaque section de ladite pluralité de sections dudit contenu, une clé correspondante pour décrypter l'une des copies filigranées cryptées de ladite section de contenu, de sorte que chacun de la pluralité de clients soit autorisé à décrypter ledit flux unique de données pour générer un contenu incorporant une séquence unique de filigranes.

5. Système informatique selon la revendication 2 ou 4, dans lequel ledit moyen de fourniture est agencé pour fournir ledit flux unique de données par la multidiffusion dudit flux unique de données.

6. Système informatique selon la revendication 2, dans lequel ledit moyen de fourniture est agencé pour fournir la première clé au premier client et la deuxième clé au deuxième client par la diffusion individuelle de la première clé au premier client et de la deuxième clé au deuxième client.

7. Système informatique selon la revendication 4, dans lequel ledit moyen de fourniture est agencé pour fournir, à chaque client de la pluralité de clients, ledit ensemble respectif de clés uniques audit client par la diffusion individuelle, audit client, dudit ensemble respectif de clés uniques audit client.

8. Système informatique selon l'une quelconque des revendications précédentes, dans lequel le premier filigrane comporte des « 0 » et le deuxième filigrane comporte des « 1 ».

9. Système informatique selon l'une quelconque des revendications précédentes, dans lequel :
ledit moyen de cryptage est agencé pour crypter une partie non filigranée dudit contenu en utilisant une troisième clé, ladite troisième clé étant différente de ladite première clé et de ladite deuxième clé ; et
ledit flux unique de données comprend ladite partie non filigranée cryptée dudit contenu.

10. Système informatique selon la revendication 9, lorsqu'elle dépend de la revendication 2, dans lequel ledit moyen de fourniture est agencé pour fournir ladite troisième clé audit premier client et audit deuxième client.

11. Système informatique selon la revendication 9, lorsqu'elle dépend de la revendication 4, dans lequel ledit moyen de fourniture est agencé pour fournir ladite troisième clé à chaque client de ladite pluralité de clients.

12. Procédé mis en oeuvre par ordinateur comprenant le fait :
de filigraner une première copie d'une section de contenu et une deuxième copie de ladite section de contenu avec, respectivement, un premier filigrane et un deuxième filigrane, ledit premier filigrane étant différent dudit deuxième filigrane ;
de crypter la première copie filigranée de ladite section de contenu en utilisant une première clé et la deuxième copie filigranée de ladite section de contenu en utilisant une deuxième clé, ladite première clé étant différente de ladite deuxième clé ; et
de former un flux unique (745) de données, ledit flux unique de données comprenant, pour au moins ladite section de contenu, à la fois la première copie filigranée cryptée de ladite section de contenu et la deuxième copie filigranée cryptée de ladite section de contenu.

13. Procédé mis en oeuvre par ordinateur selon la revendication 12 comprenant le fait :
de fournir le flux unique de données à un premier client et à un deuxième client ; et
de fournir au moins la première clé au premier client et la deuxième clé au deuxième client, de sorte que le premier client soit autorisé à décrypter la première copie filigranée cryptée de ladite section de contenu, et de sorte que le deuxième client soit autorisé à décrypter la deuxième copie filigranée cryptée de ladite section de contenu.

14. Procédé mis en oeuvre par ordinateur selon la revendication 12, dans lequel :
ledit filigranage comprend, pour chaque section d'une pluralité de sections dudit contenu, le fait de filigraner une première copie de ladite section de contenu avec un premier filigrane respectif et une deuxième copie de ladite section de contenu avec un deuxième filigrane respectif, ledit premier filigrane étant différent dudit deuxième filigrane ;
ledit cryptage comprend, pour chaque section de ladite pluralité de sections dudit contenu, le fait de crypter la première copie filigranée respective de ladite section de contenu en utilisant une première clé respective et la deuxième copie filigranée respective de ladite section de contenu en utilisant une deuxième clé respective, ladite première clé étant différente de ladite deuxième clé ; et
ledit flux unique de données comprend, pour chaque section de ladite pluralité de sections dudit contenu, à la fois la première copie filigranée cryptée respective de ladite section de contenu et la deuxième copie filigranée cryptée respective de ladite section de contenu.

15. Procédé mis en oeuvre par ordinateur selon la revendication 14, comprenant le fait :
de fournir le flux unique de données à chaque client d'une pluralité de clients ; et
de fournir, à chaque client de la pluralité de clients, un ensemble respectif de clés uniques audit client, où ledit ensemble de clés comprend, pour chaque section de ladite pluralité de sections dudit contenu, une clé correspondante pour décrypter l'une des copies filigranées cryptées de ladite section de contenu, de sorte que chacun de la pluralité de clients soit autorisé à décrypter ledit flux unique de données pour générer un contenu incorporant une séquence unique de filigranes.

16. Procédé mis en oeuvre par ordinateur selon la revendication 13 ou 15, dans lequel la fourniture dudit flux unique de données comprend la multidiffusion dudit flux unique de données.

17. Procédé mis en oeuvre par ordinateur selon la revendication 13, dans lequel la fourniture de la première clé au premier client et de la deuxième clé au deuxième client comprend la diffusion individuelle de la première clé au premier client et de la deuxième clé au deuxième client.

18. Procédé mis en oeuvre par ordinateur selon la revendication 15, dans lequel la fourniture, à chaque client de la pluralité de clients, dudit ensemble respectif de clés uniques audit client comprend la diffusion individuelle, audit client, dudit ensemble respectif de clés uniques audit client.

19. Procédé mis en oeuvre par ordinateur selon l'une quelconque des revendications 12 à 18, dans lequel le premier filigrane comporte des « 0 » et le deuxième filigrane comporte des « 1 ».

20. Procédé mis en oeuvre par ordinateur selon l'une quelconque des revendications 12 à 19, comprenant le fait de crypter une partie non filigranée dudit contenu en utilisant une troisième clé, ladite troisième clé étant différente de ladite première clé et de ladite deuxième clé ;
dans lequel ledit flux unique de données comprend ladite partie non filigranée cryptée dudit contenu.

21. Procédé mis en oeuvre par ordinateur selon la revendication 20, lorsqu'elle dépend de la revendication 13, comprenant le fait de fournir ladite troisième clé audit premier client et audit deuxième client.

22. Procédé mis en oeuvre par ordinateur selon la revendication 20, lorsqu'elle dépend de la revendication 15, comprenant le fait de fournir ladite troisième clé à chaque client de ladite pluralité de clients.

23. Support lisible par machine portant des instructions de processeur qui, si elles sont exécutées par un processeur (802), ordonnent audit processeur (802) de réaliser le procédé de la revendication 12, les instructions de processeur comprenant :
des instructions pour filigraner une première copie d'une section de contenu et une deuxième copie de ladite section de contenu avec, respectivement, un premier filigrane et un deuxième filigrane, ledit premier filigrane étant différent dudit deuxième filigrane ;
des instructions pour crypter la première copie filigranée de ladite section de contenu en utilisant une première clé et la deuxième copie filigranée de ladite section de contenu en utilisant une deuxième clé, ladite première clé étant différente de ladite deuxième clé ; et
des instructions pour former un flux unique (745) de données, ledit flux unique de données comprenant, pour au moins ladite section de contenu, à la fois la première copie filigranée cryptée de ladite section de contenu et la deuxième copie filigranée cryptée de ladite section de contenu.

24. Support lisible par machine selon la revendication 23, dans lequel les instructions de processeur comprennent :
des instructions pour fournir le flux unique de données à un premier client et à un deuxième client ; et
des instructions pour fournir au moins la première clé au premier client et la deuxième clé au deuxième client, de sorte que le premier client soit autorisé à décrypter la première copie filigranée cryptée de ladite section de contenu, et de sorte que le deuxième client soit autorisé à décrypter la deuxième copie filigranée cryptée de ladite section de contenu.

25. Support lisible par machine selon la revendication 24, dans lequel :
ledit filigranage comprend, pour chaque section d'une pluralité de sections dudit contenu, le fait de filigraner une première copie de ladite section de contenu avec un premier filigrane respectif et une deuxième copie de ladite section de contenu avec un deuxième filigrane respectif, ledit premier filigrane étant différent dudit deuxième filigrane ;
ledit cryptage comprend, pour chaque section de ladite pluralité de sections dudit contenu, le fait de crypter la première copie filigranée respective de ladite section de contenu en utilisant une première clé respective et la deuxième copie filigranée respective de ladite section de contenu en utilisant une deuxième clé respective, ladite première clé étant différente de ladite deuxième clé ; et
ledit flux unique de données comprend, pour chaque section de ladite pluralité de sections dudit contenu, à la fois la première copie filigranée cryptée respective de ladite section de contenu et la deuxième copie filigranée cryptée respective de ladite section de contenu.

26. Support lisible par machine selon la revendication 25, dans lequel les instructions de processeur comprennent :
des instructions pour fournir le flux unique de données à chaque client d'une pluralité de clients ; et
des instructions pour fournir, à chaque client de la pluralité de clients, un ensemble respectif de clés uniques audit client, où ledit ensemble de clés comprend, pour chaque section de ladite pluralité de sections dudit contenu, une clé correspondante pour décrypter l'une des copies filigranées cryptées de ladite section de contenu, de sorte que chacun de la pluralité de clients soit autorisé à décrypter ledit flux unique de données pour générer un contenu incorporant une séquence unique de filigranes.

27. Support lisible par machine selon la revendication 24 ou 26, dans lequel la fourniture dudit flux unique de données comprend la multidiffusion dudit flux unique de données.

28. Support lisible par machine selon la revendication 24, dans lequel la fourniture de la première clé au premier client et de la deuxième clé au deuxième client comprend la diffusion individuelle de la première clé au premier client et de la deuxième clé au deuxième client.

29. Support lisible par machine selon la revendication 26, dans lequel la fourniture, à chaque client de la pluralité de clients, dudit ensemble respectif de clés uniques audit client comprend la diffusion individuelle, audit client, dudit ensemble respectif de clés uniques audit client.

30. Support lisible par machine selon l'une quelconque des revendications 23 à 29, dans lequel le premier filigrane comporte des « 0 » et le deuxième filigrane comporte des « 1 ».

31. Support lisible par machine selon l'une quelconque des revendications 23 à 30, dans lequel les instructions de processeur comprennent des instructions pour crypter une partie non filigranée dudit contenu en utilisant une troisième clé, ladite troisième clé étant différente de ladite première clé et de ladite deuxième clé ; où ledit flux unique de données comprend ladite partie non filigranée cryptée dudit contenu.

32. Support lisible par machine selon la revendication 31, lorsqu'elle dépend de la revendication 24, dans lequel les instructions de processeur comprennent des instructions pour fournir ladite troisième clé audit premier client et audit deuxième client.

33. Support lisible par machine selon la revendication 31, lorsqu'elle dépend de la revendication 26, dans lequel les instructions de processeur comprennent des instructions pour fournir ladite troisième clé à chaque client de ladite pluralité de clients.
